# EUROPEAN PATENT SPECIFICATION

(11) **EP 3 277 914 B1**
(45) Date of publication and mention of the grant of the patent: **04.12.2019**
(21) Application number: 15817815.2
(22) Date of filing: 18.12.2015
(51) Int. Cl.: E21B 25/00, E21B 10/02, B23B 51/04, B25F 5/02, B28D 1/04

(54) **SYSTEM, METHOD, CORE DRILL BIT AND HAND HELD CORE DRILLING MACHINE FOR HOLE DRILLING IN AN OBJECT**
SYSTEM, VERFAHREN, KERNBOHRMEISSEL UND HANDGEFÜHRTE KERNBOHRMASCHINE ZUM BOHREN EINES LOCHES IN EINEM OBJEKT
SYSTÈME, PROCÉDÉ, FORET DE SONDEUSE À CAROTTES ET SONDEUSE À CAROTTES À MAIN POUR FORAGE DE TROU DANS UN OBJET

(30) Priority: 02.04.2015 SE 1530047
(43) Date of publication of application: 07.02.2018
(73) Proprietor: Ekström Byggteknik AB, 414 58 Göteborg (SE)
(72) Inventor: EKSTRÖM, Pär, 414 58 Göteborg (SE)
(74) Representative: Zacco Sweden AB
(86) International application number: PCT/EP2015/080579
(87) International publication number: WO 2016/155858

(56) References cited:
- JP-A- H11 320 548
- JP-A- H11 320 548
- US-A- 5 366 326
- US-A1- 2008 179 105
- US-A1- 2008 179 105
- US-A1- 2011 135 412
- US-A1- 2011 135 412

## Description

### TECHNICAL FIELD

This disclosure relates to a system for hole drilling in an object, comprising a core drilling machine, a core drill bit and a reaction bar arranged for transmitting rotating reaction forces from the core drilling machine to the object, where the core drill bit is connected to the core drilling machine and the core drilling machine is equipped with a power source in order to apply a rotating force to the core drill bit. The disclosure also relates to a core drill bit and a core drilling machine for hole drilling in an object and a method for hole drilling in an object with a core drilling machine, a core drill bit and a reaction bar arranged for transmitting rotating reaction forces from the core drilling machine to the object. The system, method, core drill bit and core drilling machine are suitable for drilling holes of larger diameters in walls, ceilings, floors and other objects made of concrete, masonry, stone and the like.

### BACKGROUND

When drilling holes of larger diameters in walls, ceilings, floors and other objects made of concrete, masonry, stone and the like, core drill bits are commonly used. Usually such drill bits are used for drilling holes between 50 and 250 mm and in extreme cases up to 600 mm.

The core drill bit is connected to a drilling machine. The drilling machine applies a rotational force to the core drill bit and often a drill stand is used to stabilize the drilling machine and the core drill bit in the drilling operation. When using a drill stand, the drill stand holds the drilling machine in a steady drilling position and takes up rotational forces on the drilling machine to secure a steady drilling process. The drill stand also centres the core drill bit in a correct drilling position. The drill stand has a base plate that is mounted to the object via expander bolts or vacuum. The drill stand further includes a column mounted to the base plate and a carriage for the drilling machine attached to the column. Either straight or angled holes could be drilled and therefore the column could be tilted, e.g. between zero degrees and forty-five degrees.

US2011/135412A1 discloses a core drilling system with a torque shaft for forming a hole in a substrate.

Drill stands of the above described type are disclosed in WO2009/058156A1 and WO2009/088499A1. Some disadvantages with drill stands of this type are that they are heavy, inconvenient and time consuming to work with when being mounted to an object and during the positioning of the core drill bit and take up a lot of space when used. Further the drill stand could damage surrounding surfaces when using expander bolts for anchoring the drill stand to the object.

Another possibility is hand held drilling without the use of a drill stand, where the drilling machine with connected core drill bit are held in place by an operator during the drilling operation. There are a number of problems associated with hand held drilling, such as the positioning of the core drill bit into the correct drilling position and rotating reaction forces transferred to the drilling machine during the drilling operation need to be handled by the operator.

There is thus a need for an improved way of drilling holes in objects where the core drill bit is easily positioned into its drilling position and the drilling machine and core drill bit are stabilized and prevented from rotating in an easy way, and where the drilling operation also can be performed where the space for the drilling operation is limited.

### SUMMARY

An object of the present disclosure is to provide a system for hole drilling, involving a drilling machine and a drill bit core, where the previously mentioned problems during drilling operations are avoided. This object is at least partly achieved by the features of the independent claims.

The disclosure concerns a system for hole drilling in an object comprising a core drilling machine, a core drill bit and a reaction bar arranged for transmitting rotating reaction forces from the core drilling machine to the object. The system has an axial direction along an axis around which axis the core drill bit is rotating when drilling. The core drill bit is connected to the core drilling machine and the core drilling machine is equipped with a power source in order to apply a rotating force to the core drill bit, and the core drill bit has an axially extending tubular shaft with an inner envelop surface defining an inner periphery of the core drill bit, wherein the reaction bar is non-rotatably connected to the core drilling machine. The reaction bar is arranged inside the inner periphery of the axially extending tubular shaft of the core drill bit. The system further comprises a torque member that is non-rotatably connecting the reaction bar to the object. The reaction bar is in the axial direction non-slidingly connected to the core drilling machine, and the torque member has a reaction bar opening allowing the reaction bar to be slidingly connected in the axial direction to the object. Advantages with the system described above are that the drilling operation is easily performed without heavy and inconvenient drill stands and the drilling can be performed in an easy way also where the space is limited. The torque member in an easy way secures that rotating reaction forces are transmitted from the core drilling machine to the object. The reaction bar is in an efficient way stabilizing the core drilling machine and core drill bit during the drilling operation.

According to an aspect of the disclosure, the reaction bar is arranged essentially parallel with the axially extending tubular shaft of the core drill bit.

According to an aspect of the disclosure, the core drill bit is releasably connected to the core drilling machine. An advantage with this feature is that the core drill bit easily can be changed.

According to an aspect of the disclosure, the core drill bit has a connection member releasably connecting the core drill bit to an attachment member on the core drilling machine.

According to an aspect of the disclosure, the connection member and the attachment member has matching threads, grooves or splines for releasably connecting the core drill bit to the core drilling machine.

The disclosure further concerns a method for hole drilling in an object with a core drilling machine, a core drill bit and a reaction bar arranged for transmitting rotating reaction forces from the core drilling machine to the object, wherein the core drill bit when drilling is rotating around an axis extending in an axial direction. The core drill bit is connected to the core drilling machine and the core drilling machine is equipped with a power source in order to apply a rotating force to the core drill bit, and the core drill bit has an axially extending tubular shaft with an inner envelop surface defining an inner periphery of the core drill bit; the method comprising the steps: drilling a pilot hole in the object; non-rotatably connecting a rear portion of the reaction bar to the core drilling machine, where the reaction bar is non-rotatably connected to the core drilling machine inside the inner periphery of the axially extending tubular shaft of the core drill bit; non-rotatably connecting a front portion of the reaction bar to the object by aligning a reaction bar opening of a torque member with the pilot hole and attaching the torque member to the object so that the reaction bar in an axial direction is slidingly connected to the object via the torque member, allowing the reaction bar to slide through the torque member and pilot hole during the drilling operation; and performing the drilling operation with the reaction bar non-rotatably connected to the core drilling machine and the object.

Advantages with these features are that the drilling operation is easily performed without heavy and inconvenient drill stands and the drilling can be performed in an easy way also where the space is limited. The core drill bit can be easily positioned and the reaction bar is in an efficient way stabilizing the core drilling machine and core drill bit during the drilling operation.

### BRIEF DESCRIPTION OF DRAWINGS

In the detailed description below reference is made to the following figures, in which:
- Figure 1: shows, schematically, an example of a system for drilling holes in an object according to the disclosure;
- Figure 2: shows, schematically in a perspective view, parts of the system for drilling holes in an object according to the disclosure;
- Figure 3: shows, schematically, a front part of the core drilling machine according to the disclosure;
- Figure 4: shows, schematically, a section along the line I-I through the front part of the core drilling machine in Figure 3;
- Figure 5: shows, schematically, a core drill bit according to the disclosure;
- Figure 6: shows, schematically, a front view of a core drill bit according to the disclosure;
- Figures 7a-b: show, schematically, torque members according to the disclosure;
- Figures 8a-c: show, schematically, alternative core drill bits according to the disclosure;
- Figure 9: shows, schematically, a system not part of the invention for drilling holes in an object according to the disclosure.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

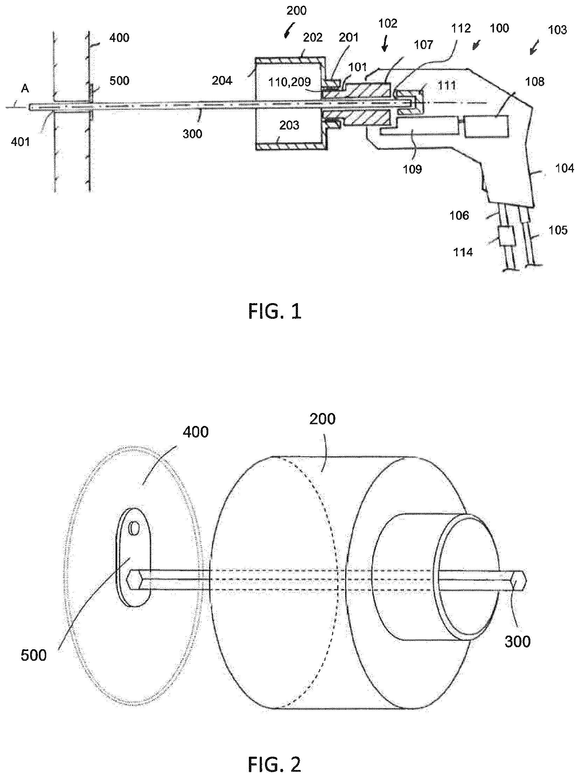

Figures 1 and 2 schematically show a system for drilling holes of larger diameters in an object 400 such as walls, ceilings, floors made of concrete, masonry, stone and the like, where a core drill bit 200 is connected to a core drilling machine 100. The core drilling machine 100 is equipped with a power source 108, such as an electrical, hydraulic or pneumatic motor, which during the drilling operation is applying a rotating force or torque to the core drill bit 200 through a drilling shaft 107 arranged in the drilling machine 100.

The power source 108 rotates the drilling shaft 107 around an axis A when drilling. The axis A is defining the axial direction of the drilling system. When connected to the core drilling machine 100, also the core drill bit 200 rotates around the axis A when drilling. A direction perpendicular to the axis A is defined as the radial direction for the drilling system.

The core drill bit 200 is connected to the core drilling machine 100 by a connection member 201 that is attaching the core drill bit 200 to an attachment member 101 of the core drilling machine 100. The core drill bit 200 has an axially extending tubular shaft 202 with an inner envelop surface 203 defining an inner periphery 204 of the core drill bit.

Further, the system has a reaction bar 300 extending in the axial direction that is arranged for transmitting rotating reaction forces from the core drilling machine 100 to the object 400, such that a drilling operator may safely perform the drilling operation without having to manually counter the rotating forces that the power source 108 generates on the housing of the core drilling machine 100. The reaction bar 300 is non-rotatably connected to the core drilling machine 100 and arranged inside the inner periphery 204 of the axially extending tubular shaft 202 of the core drill bit. The reaction bar 300 can thus not rotate around the axis A in relation to the core drilling machine 100 when connected to the core drilling machine 100.

The core drilling machine 100 has a front part 102 and a rear part 103 with a handle 104. A front handle, not shown in Figure 1, could be attached to the front part 102 of the core drilling machine 100 to secure a more stable drilling operation. A power supply line 105, such as an electrical cable extends into the drilling machine, for example into the handle 104. A water hose 106 may be connected to the core drilling machine 100. The water hose may for example extend into the rear part 102 of the core drilling machine 100 from below the handle 104.

The drilling shaft 107 is arranged in the front part 102 of the core drilling machine 100 and the attachment member 101 is arranged on the drilling shaft 107 to which the core drill bit 200 is connected.

The attachment member 101 may have a threaded area 110 on the outer surface of the drilling shaft 107 for connecting the core drilling machine 100 to the core drill bit 200 via matching threads 209. Other suitable connection means such as spline, groove and bolt connections may be used instead of a threaded connection. The drilling shaft 107 and attachment member 101 can be made of any suitable material, such as for example steel, aluminium or other metals, or composite materials.

Within the rear part 103 of the core drilling machine 100 the power source 108 in form of an electrical motor may be housed in a motor housing and the electrical motor may be manoeuvred by a switch or other means located in the handle 104. A motor shaft extends from the electrical motor and may be connected to the drilling shaft 107 via a transmission unit 109, or directly without a transmission unit. When drilling, the power source 108 rotates the drilling shaft 107 via the transmission unit 109. Different known drilling machine arrangements can be used for rotating the drilling shaft 107 by the power source 108 via the transmission unit 109. The transmission unit 109 could be a conventional gear drive transmission having gears that link the motor shaft to the drilling shaft 107. The drilling shaft 107 could for example have toothed gears arranged on the outer surface that are connected to the transmission unit 109.

Other suitable power sources, instead of an electrical motor, for the core drilling machine 100 could be hydraulic or pneumatic motors, where either a hydraulic fluid or air is used to achieve the rotary motion that is applied to the core drill bit 200.

In addition to the rotational force applied to the core drill bit 200 by the core drilling machine 100 during the drilling operation, the core drilling machine 100 may also be designed to apply a hammering action to the object 400 by the core drill bit 200 in order to provide quicker drilling with less effort through short and rapid hammer thrusts.

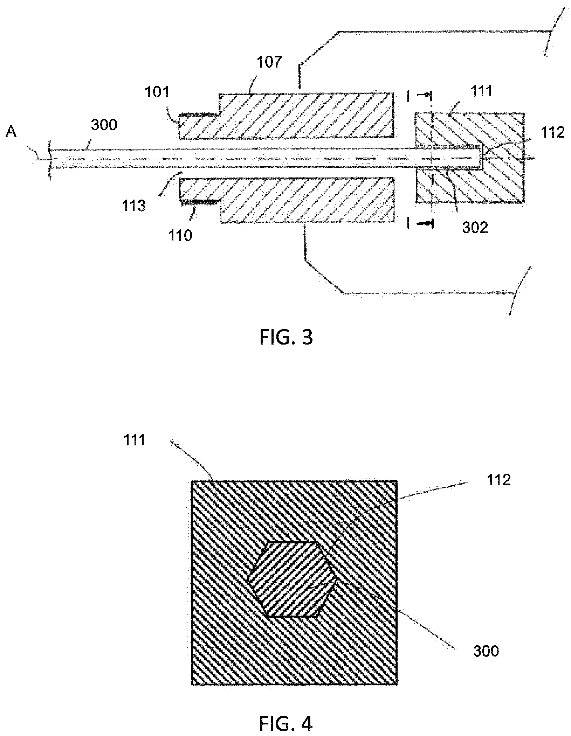

Figures 3 and 4 schematically show the front part 102 of the core drilling machine 100. The drilling shaft 107 has a tubular configuration allowing the reaction bar 300 to be arranged radially inside the drilling shaft 107 and connected to a connection device 111 that is connecting the reaction bar 300 to the core drilling machine 100. The connection device 111 has a receiving section 112 for the reaction bar 300. The reaction bar 300 is connected to the connection device 111 by pushing a rear portion 302 of the reaction bar 300 into the receiving section 112. The reaction bar 300 and the connection device 111 are configured so that they are connected in a non-rotating manner in relation to the drilling machine 100, meaning that the reaction bar cannot rotate around the axis A in relation to a housing or handle 104 of the core drilling machine 100 when being connected. The connection device 111 can be made of any suitable material, such as for example steel, aluminium or other metals, composite materials or combinations of different materials.

In the drilling operation, the drilling shaft 107 rotates around the reaction bar 300. The receiving section 112 of the connection device 111 is holding the reaction bar 300 axially in place in during the drilling operation with frictional forces between the rear portion 302 of the reaction bar 300 and the receiving section 112. If a more stable connection is desired, the rear portion 302 could be anchored to the receiving section 112 with a screw attachment or similar arrangement.

To secure that the reaction bar 300 is not rotating around the axis A in relation to the core drilling machine 100, the reaction bar may have a non-circular cross sectional shape, in this described embodiment a hexagonal shape, and the receiving section 112 is arranged with a similarly shaped hexagonal cross section. In this way it is secured that the reaction bar 300 easily can be attached to the receiving section 112 in a non-rotating manner.

Any other suitable cross sectional shapes can be used for the reaction bar 300 and the receiving section 112 preventing the reaction bar 300 to rotate in relation to the core drilling machine 100, such as e.g. oval, w-shaped, x-shaped, rectangular and triangular cross sectional shapes.

Between the drilling shaft 107 and the reaction bar 300 a channel 113 may be formed. The channel 113 may be used for supplying water to the drilling area during the drilling operation for cooling down the core drill bit 200. The water hose 106 may be equipped with a hose connector 114 that connects the water hose 106 to a pressurized water source. The water hose 106 leads the water from the pressurized water source to the channel 113 so that water is supplied inside the core drill bit 200 when drilling. Other suitable cooling fluids may alternatively be used.

In an alternative embodiment the core drill bit 200 may be connected to the drilling shaft 107 and instead of applying the rotating force to the drilling shaft 107, the power source 108 could apply the rotating force to the core drill bit 200 via an external axis directly connected to the outer surface of the core drill bit, for example through gears on the external axis connected to toothed gears on the outer surface of the core drill bit 200.

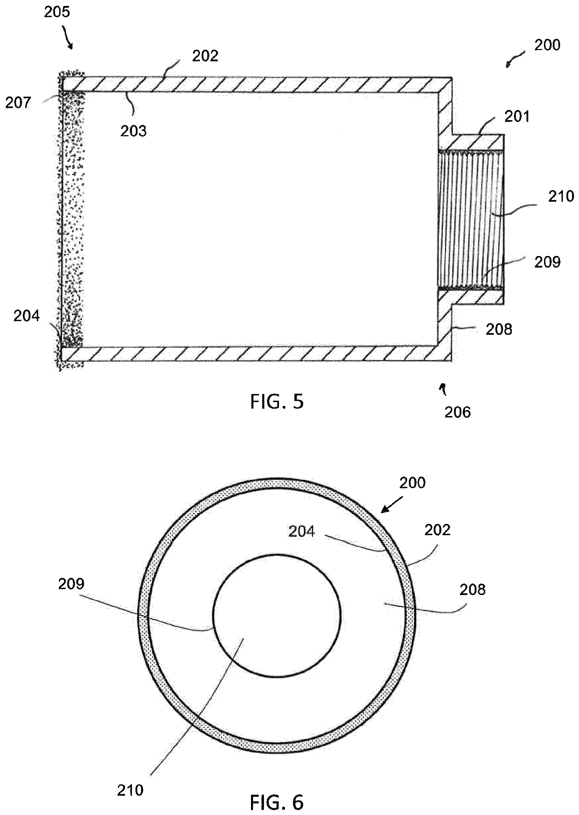

Figures 5 and 6 schematically show the core drill bit 200. The axially extending tubular shaft 202 of the core drill bit 200 has a leading end 205 and a trailing end 206 in the drilling direction, where the drilling direction is parallel or essentially parallel to the axis A. The core drill bit 200 can be made of any suitable material, such as for example steel, aluminium or other metals, composite materials or combinations of different materials. The leading end 205 is equipped with cutting members 207 around the leading end periphery of the tubular shaft 202. The cutting members could be of any conventional type, such as abrasive cutting bodies made of synthetic diamonds embedded in a metallic matrix. Cutting members 207 of this sort are usually larger in the radial direction than the corresponding wall thickness of the tubular shaft 202, whereby a free cutting effect is achieved and the outer surface of the tubular support does not contact the surfaces of the object 400. The cutting members 207 could be of any conventional type suitable for drilling in walls, ceilings, floors and other objects made of concrete, masonry, stone and the like, such as cutting segments arranged on the leading end 205 of the tubular shaft 202, as described in US4915182A, US4966502A and US2003/0141115A1.

According to the disclosed example embodiment, the tubular shaft 202 stretches in the axial direction from the cutting members 207 in the leading end 205 to a rear wall 208 in the trailing end 206 of the core drill bit 200. A flange attached to the rear wall 208 may constitute the connection member 201 that extends axially outside the tubular shaft 202, and the inner part of the connection member 201 may have threads 209 arranged on the inner side of the connection member 201 in the radial direction, that connect the core drill bit 200 to the threaded area 110 of the drilling shaft 107 on the drilling machine 100. The core drill bit 200 is releasably connected to the core drilling machine 100, which means that the core drill bit 200 can be connected to the drilling machine for drilling purposes and disconnected from the drilling machine when needed, e.g. when changing the drill bit 200 or when transporting the core drilling machine 100.

Before drilling, the connection member 201 of the core drill bit 200 may be screwed on the attachment member 101 of the drilling shaft 107 on the drilling machine 100 to secure that the core drill bit 200 is securely attached to the core drilling machine 100. After the drilling operation is completed or when changing the core drill bit 200, the core drill bit 200 is simply removed from the core drilling machine by unscrewing the core drill bit 200. Other suitable connection means such as spline connections may be used instead of a threaded connection.

The area radially inside the connection member 201 of the core drill bit 200 defines a reaction bar opening 210 that makes it possible for the reaction bar 300 to be connected to the drilling machine 100 when the core drill bit 200 is connected to the drilling machine 100. Water may be supplied to the core drill bit 200 during the drilling operation via the reaction bar opening 210 of the core drill bit 200. Alternatively, cooling fluid may be supplied via a hollow reaction bar with holes arranged in the wall of the reaction bar, allowing the fluid to pass through the reaction bar to the drilling area.

The core drill bit 200 could have different diameters depending on the desired size of the hole to be drilled in the object 400. Core drill bits usually have diameters between 50 and 250 mm and in extreme cases up to 600 mm. Also the axial extension of the core drill bit 200 could vary depending on how deep the hole to be drilled should be, i.e. depending on the thickness of the object 400. Core drill bits usually have an axial length up to 500 mm, but also lengths up to 1000 mm are possible.

As described above, the reaction bar 300 is arranged for transmitting rotating reaction forces from the core drilling machine 100 to the object 400. The reaction bar 300 has an elongated extension in the axial direction, parallel or essentially parallel to the axis A, corresponding to the drilling direction when connected to the core drilling machine 100. The rear portion 302 of the reaction bar 300 is non-rotatably attached to the receiving section 112 of the core drilling machine 100, meaning that the reaction bar 300 cannot rotate around the axis A in relation to the core drilling machine 100 when being connected. On the opposite side, the reaction bar 300 has a front portion 301 that during the drilling operation is non-rotatably connected to the drilling object 400, meaning that the reaction bar 300 cannot rotate around the axis A in relation to the object 400 when being connected.

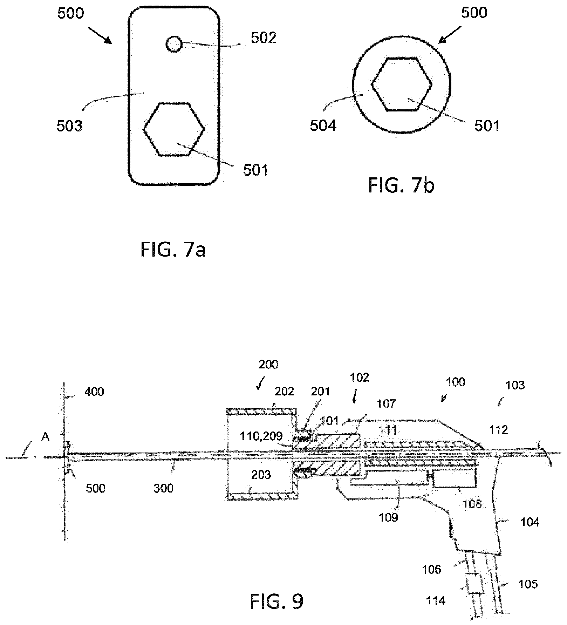

Figure 7a schematically shows an example embodiment of a torque member 500 for improving the non-rotatably connection of the reaction bar 300 to the object 400. The torque member 500 is attached to the object 400 before the main drilling operation starts. The main drilling operation is preceded by the pre-drilling of a pilot hole 401 in the object 400. The diameter of the pilot hole 401 may be slightly larger than the diameter of the reaction bar 300 for avoiding undesirable sliding friction between the reaction bar 300 and the object 400. The pilot hole 401 has a small diameter compared to the hole to be drilled by the core drill bit 200 and when drilling the pilot hole, conventional drilling machines with small diameter drills suitable for drilling in concrete, masonry or stone can be used. The pilot hole should be drilled all the way through the object 400 to establish a free passage way for the reaction bar 300 during the drilling operation.

The torque member 500 may be made from a plate 503 of steel or similar suitable material. The torque member 500 has a reaction bar opening 501 to be fitted over the pilot hole and an attachment means for non-rotatably attaching the torque member 500 to the object 400. The attachment means may include one or more attachment holes 502. The attachment hole 502 may be a small hole arranged in the torque member 500 and the torque member 500 is anchored to the object 400 with a conventional expansion bolt or similar device through the attachment hole 502 arranged in the plate 503.

According to an example embodiment, the reaction bar opening 501 may have a hexagonal cross sectional shape corresponding to the hexagonal cross sectional shape of the reaction bar 300 to secure that the reaction bar 300 cannot rotate around the axis A in relation to the torque member 500 when attached to the object 400.

The front portion 301 of the reaction bar 300 is during the drilling operation slidingly connected in the axial direction to the torque member 500 when attached to the object 400. The torque member 500 secures that the reaction bar 300 can be connected to the drilling object 400 in a non-rotating manner in relation to the axis A. Further, the torque member 500 allows the reaction bar 300 to slide axially through the object 400 into the pilot hole 401.

To secure that the reaction bar 300 can slide axially in relation to the torque member 500 the reaction bar opening 501 may be slightly larger than the cross section of the reaction bar 300 to create a small play between the edges of the reaction bar opening 501 and the reaction bar 300. This play should be large enough to allow drilling operations also for drilling angled holes, i.e. holes that are drilled in a direction that is not perpendicular to the surface of the object 400, without allowing the reaction bar 300 to rotate around the axis A in relation to the object 400. For drilling angled holes, the pilot hole 401 is drilled in the desired angle, allowing the reaction bar 300 to steer the drilling operation in the desired direction.

Figure 7b schematically shows another example embodiment of a torque member 500 for improving the non-rotatably connection of the reaction bar 300 to the object 400. Instead of using a torque member 500 made from a plate of steel or similar suitable material, a plug 504 with a reaction bar opening 501 could alternatively be used. The plug 504 could be made of any suitable material, such as for example plastic materials, wood or metal. The plug 504 may be inserted into the pilot hole 401 before the drilling operation and the friction between the plug 504 and the pilot hole 401 in combination with a non-rotatable connection between the plug 504 and the reaction bar 300 secures that the reaction bar 300 can be connected to the drilling object 400 in a non-rotating manner in relation to the axis A. The diameter of the pilot hole 401 is drilled to match the outer diameter of the plug 504.

As described above, any other suitable cross sectional shapes, such as e.g. oval, w-shaped, x-shaped, rectangular and triangular cross sectional shapes, can be used for the reaction bar 300 and also for the reaction bar opening 501 of the torque member 500, preventing the reaction bar 300 to rotate in relation to the torque member 500 and the object 400 around the axis A.

The reaction bar 300 can be made with different lengths in the axial direction and the radial extension of the reaction bar 300 can be varied to match the core drill bit 200 and the core drilling machine. The reaction bar 300 can be made of a homogenous material or from a hollow bar. Any suitable material can be used when manufacturing the reaction bar 300, such as steel, aluminium and composite materials.

Before starting the main drilling operation, the pilot hole 401 is drilled in the object 400, followed by the attachment of the torque member 500 to the object 400 as described above. The core drill bit 200 and the rear portion 302 of the reaction bar 300 are connected to the core drilling machine 100 so that the reaction bar 300 is non-rotatably connected to the core drilling machine 100 inside the inner periphery 204 of the axially extending tubular shaft 202 of the core drill bit 200. When starting the main drilling operation, the front portion 301 of the reaction bar is inserted into the reaction bar opening 501 of the torque member 500 and the reaction bar 300 slides into the pilot hole 401 until the cutting members 207 of the core drill bit 200 reaches the surface of the object 400. In this way the core drill bit 200 is easily positioned into the correct drilling position. The power source 108 applies a rotating force to the core drill bit 200 and the rotational speed may be varied depending on the material of the object 400. When further pushing the core drilling machine 100 in the drilling direction, the core drill bit 200 drills the hole in the object 400. The core drilling machine 100 is prevented from rotating around the axis A by the reaction bar 300, which is transmitting rotating reaction forces from the core drilling machine 100 to the object 400, since the reaction bar 300 is non-rotatably connected to the object 400 by the torque member 500 and to the drilling machine 100 by the receiving section 112. Cooling fluid such as water may be supplied to the core drill bit 200 during the drilling operation.

When the drilling operation is completed and the hole is drilled through the object 400, the core drilling machine 100, the core drill bit 200 and the reaction bar can be removed from the object together with the resulting object core, by pulling out the core drilling machine 100, the core drill bit 200 and the reaction bar in a direction opposite to the drilling direction. The resulting object core may be secured to the reaction bar 300 when the drilling operation is completed by a securing means, such as for example by arranging the outer part of the front portion 301 of the reaction bar in a pivoting manner in relation to the reaction bar 300. When the outer part of the front portion 301 of the reaction bar 300 has passed through the pilot hole 401, the outer part pivots in relation to the reaction bar and locks the resulting object core when pulling out the core drilling machine 100, the core drill bit 200 and the reaction bar 300 in the direction opposite to the drilling direction.

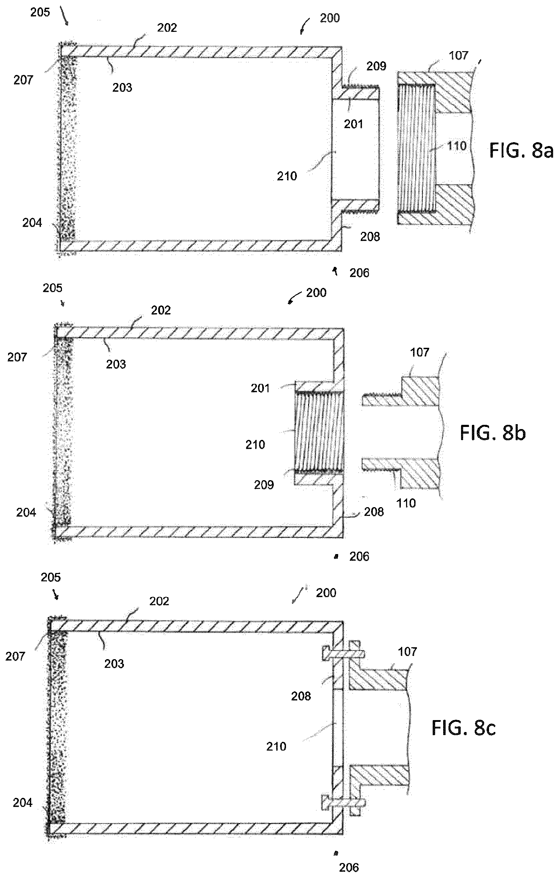

Figure 8a schematically shows an alternative embodiment for connecting the core drill bit 200 to the core drilling machine 100. The tubular shaft 202 stretches in the axial direction from the cutting members 207 in the leading end 205 to a rear wall 208 in the trailing end 206 of the core drill bit 200. A flange attached to the rear wall 208 may constitute the connection member 201 that extends axially outside the tubular shaft 202, and the outer part of the connection member 201 may have threads 209 arranged on the outer side of the connection member 201 in the radial direction, that connect the core drill bit 200 to the threaded area 110 arranged on the inner side of the drilling shaft 107 in the radial direction. The core drill bit 200 is releasably connected to the core drilling machine 100. Other suitable connection means such as spline connections may be used instead of a threaded connection.

Figure 8b schematically shows an alternative embodiment for connecting the core drill bit 200 to the core drilling machine 100. The tubular shaft 202 stretches in the axial direction from the cutting members 207 in the leading end 205 to a rear wall 208 in the trailing end 206 of the core drill bit 200. A flange attached to the rear wall 208 may constitute the connection member 201 that extends axially inside the tubular shaft 202, and the inner part of the connection member 201 may have threads 209 arranged on the inner side of the connection member 201 in the radial direction, that connect the core drill bit 200 to the threaded area 110 arranged on the outer side of the drilling shaft 107 in the radial direction. The core drill bit 200 is releasably connected to the core drilling machine 100. Other suitable connection means such as spline connections may be used instead of a threaded connection.

Figure 8c schematically shows an alternative embodiment for connecting the core drill bit 200 to the core drilling machine 100. The tubular shaft 202 stretches in the axial direction from the cutting members 207 in the leading end 205 to a rear wall 208 in the trailing end 206 of the core drill bit 200. The rear wall may be provided with one or more holes for attaching the core drill bit to the drilling shaft with one or more bolts. The drilling shaft 107 may be provided with one or more holes for receiving the bolts and either the one or more holes in the rear wall 208 or the drilling shaft 107 may be threaded for securing the one or more bolts.

Figure 9 schematically shows a system not part of the invention for drilling holes of larger diameters in an object 400 such as walls, ceilings, floors made of concrete, masonry, stone and the like, where in the same way as describe above a core drill bit 200 is connected to a core drilling machine 100. The core drilling machine 100 is equipped with a power source 108, which during the drilling operation is applying a rotating force or torque to the core drill bit 200 through a drilling shaft 107 arranged in the drilling machine 100.

The power source 108 rotates the drilling shaft 107 around an axis A when drilling. The axis A is defining the axial direction of the drilling system. When connected to the core drilling machine 100, also the core drill bit 200 rotates around the axis A when drilling.

The core drill bit 200 is connected to the core drilling machine 100 by a connection member 201 that is attaching the core drill bit 200 to an attachment member 101 of the core drilling machine 100. The core drill bit 200 has an axially extending tubular shaft 202 with an inner envelop surface 203 defining an inner periphery 204 of the core drill bit. Further, the system has a reaction bar 300 extending in the axial direction that is arranged for transmitting rotating reaction forces from the core drilling machine 100 to the object 400. The reaction bar 300 is non-rotatably connected to the core drilling machine 100 and arranged inside the inner periphery 204 of the axially extending tubular shaft 202 of the core drill bit.

In this system not part of the invention the reaction bar 300 is not slidingly connected in the axial direction to the torque member 500. The torque member 500 is instead fixed to the front portion 301 of the reaction bar 300. The torque member 500 may for example be made from a plate 503 of steel or similar suitable material. If both the reaction bar 300 and torque member 500 are made of steel, the torque member 500 could be welded to the reaction bar 300. The plate 503 of the torque member 500 may have holes drilled through the plate 503 that are used for attaching the torque member 500 to the object 400 with expansion bolts or similar fastening means so that the reaction bar 300 cannot rotate around the axis A in relation to the object 400. For enabling relative motion between the object 400 and the core drilling machine during the drilling operation, the reaction bar 300 is slidingly connected in the axial direction to the core drilling machine. A connection device 111 of the core drilling machine 100 allows the reaction bar 300 to axially slide through the connection device 111 and the core drilling machine to achieve the same effect as in the earlier described embodiment. The connection device 111 is arranged with a receiving section 112 forming a channel through which the reaction bar 300 can slide.

The reaction bar 300 and the connection device 111 are configured so that they are connected in a non-rotating manner in relation to the core drilling machine 100, meaning that the reaction bar cannot rotate around the axis A in relation to the core drilling machine 100 when being connected.

In the drilling operation, a drilling shaft 107 rotates around the reaction bar 300. To secure that the reaction bar 300 is not rotating in relation to the core drilling machine 100 around the axis A, the reaction bar has a non-circular cross sectional shape, for example a hexagonal shape, and the receiving section 112 is arranged with a similarly shaped hexagonal cross section.

The drilling operation is performed as described above, with the difference that the reaction bar slides axially in relation to the drilling machine 100 instead of in relation to the torque member 500.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, modifications may be made to adapt a particular situation or material to the teachings of the present disclosure without departing from the essential scope thereof. Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

## Claims

1. System for hole drilling in an object (400) comprising a core drilling machine (100), a core drill bit (200) and a reaction bar (300) arranged for transmitting rotating reaction forces from the core drilling machine (100) to the object (400), where the system has an axial direction along an axis (A) around which axis (A) the core drill bit (200) is rotating when drilling, where the core drill bit (200) is connected to the core drilling machine (100) and the core drilling machine (100) is equipped with a power source (108) in order to apply a rotating force to the core drill bit (200), and where the core drill bit (200) has an axially extending tubular shaft (202) with an inner envelop surface (203) defining an inner periphery (204) of the core drill bit (200), wherein the reaction bar (300) is non-rotatably connected to the core drilling machine (100), and where the reaction bar (300) is arranged inside the inner periphery (204) of the axially extending tubular shaft (202) of the core drill bit (200), where the system further comprises a torque member (500) that is non-rotatably connecting the reaction bar (300) to the object (400),
**characterized in that** the reaction bar (300) in the axial direction is non-slidingly connected to the core drilling machine (100), and where the torque member (500) has a reaction bar opening (501) allowing the reaction bar (300) to be slidingly connected in the axial direction to the object (400).

2. System for hole drilling in an object (400) according to claim 1, where the reaction bar (300) is arranged essentially parallel with the axially extending tubular shaft (202) of the core drill bit (200).

3. System for hole drilling in an object (400) according to claim 1 or 2, where the core drill bit (200) is releasably connected to the core drilling machine (100).

4. System for hole drilling in an object (400) according to claim 3, where the core drill bit (200) has a connection member (201) releasably connecting the core drill bit (200) to an attachment member (101) on the core drilling machine (100).

5. System for hole drilling in an object (400) according to claim 4, where the connection member (201) and the attachment member (101) have matching threads, grooves or splines for releasably connecting the core drill bit (200) to the core drilling machine (100).

6. Method for hole drilling in an object (400) with a core drilling machine (100), a core drill bit (200) and a reaction bar (300) arranged for transmitting rotating reaction forces from the core drilling machine (100) to the object (400), wherein the core drill bit (200) when drilling is rotating around an axis (A) extending in an axial direction, where the core drill bit (200) is connected to the core drilling machine (100) and the core drilling machine (100) is equipped with a power source (108) in order to apply a rotating force to the core drill bit (200), and where the core drill bit (200) has an axially extending tubular shaft (202) with an inner envelop surface (203) defining an inner periphery (204) of the core drill bit (200); the method comprising the steps:
drilling a pilot hole (401) in the object (400);
non-rotatably connecting a rear portion (302) of the reaction bar to the core drilling machine (100), where the reaction bar (300) is non-rotatably connected to the core drilling machine (100) inside the inner periphery (204) of the axially extending tubular shaft (202) of the core drill bit (200);
non-rotatably connecting a front portion (301) of the reaction bar to the object (400) by aligning a reaction bar opening (501) of a torque member (500) with the pilot hole (401) and attaching the torque member (500) to the object (400) so that the reaction bar (300) in the axial direction is slidingly connected to the object (400) via the torque member (500), allowing the reaction bar to slide through the torque member (500) and pilot hole (401) during the drilling operation;
performing the drilling operation with the reaction bar non-rotatably connected to the core drilling machine (100) and the object (400).

## Patentansprüche

1. System zum Lochbohren in ein Objekt (400) umfassend eine Kernbohrmaschine (100), einen Kernbohrmeißel (200) und eine Reaktionsstange (300), die für die Übertragung von rotierenden Reaktionskräften von der Kernbohrmaschine (100) an das Objekt (400) vorgesehen ist, wobei das System eine Axialrichtung entlang einer Achse (A) aufweist, um welche Achse (A) der Kernbohrmeißel (200) beim Bohren rotiert, wobei der Kernbohrmeißel (200) mit der Kernbohrmaschine (100) verbunden ist, und die Kernbohrmaschine (100) mit einer Leistungsquelle (108) ausgestattet ist, um eine rotierende Kraft auf den Kernbohrmeißel (200) auszuüben, und wobei der Kernbohrmeißel (200) einen axial sich erstreckenden rohrförmigen Schaft (202) mit einer einen Innenumfang (204) des Kernbohrmeißels (200) definierenden inneren Hüllfläche (203) aufweist, wobei die Reaktionsstange (300) mit der Kernbohrmaschine (100) nicht-rotierbar verbunden ist, und wobei die Reaktionsstange (300) innerhalb des Innenumfangs (204) des axial sich erstreckenden rohrförmigen Schafts (202) des Kernbohrmeißels (200) angeordnet ist, wobei das System ferner ein die Reaktionsstange (300) mit dem Objekt (400) nicht-rotierbar verbindendes Drehmomentelement (500) umfasst,
**dadurch gekennzeichnet, dass** die Reaktionsstange (300) in der Axialrichtung nicht gleitend mit der Kernbohrmaschine (100) verbunden ist, und wobei das Drehmomentelement (500) eine Reaktionsstangenöffnung (501) aufweist, die ermöglicht, dass die Reaktionsstange (300) in der Axialrichtung mit dem Objekt (400) gleitend verbunden ist.

2. System zum Lochbohren in ein Objekt (400) nach Anspruch 1, wobei die Reaktionsstange (300) im Wesentlichen parallel zum axial sich erstreckenden rohrförmigen Schaft (202) des Kernbohrmeißels (200) angeordnet ist.

3. System zum Lochbohren in ein Objekt (400) nach Anspruch 1 oder 2, wobei der Kernbohrmeißel (200) mit der Kernbohrmaschine (100) lösbar verbunden ist.

4. System zum Lochbohren in ein Objekt (400) nach Anspruch 3, wobei der Kernbohrmeißel (200) ein Verbindungselement (201) aufweist, das den Kernbohrmeißel (200) mit einem Befestigungselement (101) an der Kernbohrmaschine (100) lösbar verbindet.

5. System zum Lochbohren in ein Objekt (400) nach Anspruch 4, wobei das Verbindungselement (201) und das Befestigungselement (101) zusammenpassende Gewinde, Rillen oder Nuten zum lösbaren Verbinden des Kernbohrmeißels (200) mit der Kernbohrmaschine (100) aufweisen.

6. Verfahren zum Lochbohren in ein Objekt (400) mit einer Kernbohrmaschine (100), einem Kernbohrmeißel (200) und einer Reaktionsstange (300), die für die Übertragung von rotierenden Reaktionskräften von der Kernbohrmaschine (100) an das Objekt (400) vorgesehen ist, wobei der Kernbohrmeißel (200) beim Bohren um eine sich in einer Axialrichtung erstreckende Achse (A) rotiert, wobei der Kernbohrmeißel (200) mit der Kernbohrmaschine (100) verbunden ist, und die Kernbohrmaschine (100) mit einer Leistungsquelle (108) ausgestattet ist, um eine rotierende Kraft auf den Kernbohrmeißel (200) auszuüben, und wobei der Kernbohrmeißel (200) einen axial sich erstreckenden rohrförmigen Schaft (202) mit einer einen Innenumfang (204) des Kernbohrmeißels (200) definierenden inneren Hüllfläche (203) aufweist; welches Verfahren die Schritte umfasst:
Bohren eines Vorbohrloches (401) in das Objekt (400);
nicht-rotierbares Verbinden eines hinteren Abschnitts (302) der Reaktionsstange mit der Kernbohrmaschine (100), wobei die Reaktionsstange (300) mit der Kernbohrmaschine (100) innerhalb des Innenumfangs (204) des axial sich erstreckenden rohrförmigen Schafts (202) des Kernbohrmeißels (200) nicht-rotierbar verbunden ist;
nicht-rotierbares Verbinden eines vorderen Abschnitts (301) der Reaktionsstange mit dem Objekt (400) durch Ausrichten einer Reaktionsstangenöffnung (501) eines Drehmomentelements (500) zum Vorbohrloch (401) und Befestigen des Drehmomentelements (500) am Objekt (400), so dass die Reaktionsstange (300) in der Axialrichtung mit dem Objekt (400) über das Drehmomentelement (500) gleitend verbunden wird, wodurch ermöglicht wird, dass während des Bohrvorgangs die Reaktionsstange durch das Drehmomentelement (500) und das Vorbohrloch (401) gleiten kann;
Durchführen des Bohrvorgangs mit der mit der Kernbohrmaschine (100) und dem Objekt (400) nicht-rotierbar verbundenen Reaktionsstange.

## Revendications

1. Système de forage de trous dans un objet (400) comprenant une foreuse à noyau (100), un trépan à noyau (200) et une barre de réaction (300) conçue pour transmettre des forces de réaction en rotation de la foreuse à noyau (100) à l'objet (400), le système ayant une direction axiale le long d'un axe (A), axe (A) autour duquel le trépan à noyau (200) tourne lors du forage, le trépan à noyau (200) étant relié à la foreuse à noyau (100), et la foreuse à noyau (100) étant équipée d'une source d'alimentation (108) afin d'appliquer une force de rotation au trépan à noyau (200), et le trépan à noyau (200) ayant un arbre tubulaire (202) s'étendant axialement avec une surface enveloppe intérieure (203) définissant une périphérie intérieure (204) du trépan à noyau (200), dans lequel la barre de réaction (300) est reliée de manière non rotative à la foreuse à noyau (100) et dans lequel la barre de réaction (300) est agencée à l'intérieur de la périphérie intérieure (204) de l'arbre tubulaire s'étendant axialement (202) du trépan à noyau (200), dans lequel le système comprend en outre un élément de couple (500) qui relie de manière non rotative la barre de réaction (300) à l'objet (400), **caractérisé en ce que** la barre de réaction (300) dans la direction axiale est raccordée de manière non coulissante à la foreuse à noyau (100), et dans lequel l'élément de couple (500) a une ouverture de barre de réaction (501) permettant à la barre de réaction (300) d'être reliée de manière coulissante dans la direction axiale à l'objet (400).

2. Système de forage de trous dans un objet (400) selon la revendication 1, dans lequel la barre de réaction (300) est agencée essentiellement parallèlement à l'arbre tubulaire s'étendant axialement (202) du trépan à noyau (200).

3. Système de forage de trous dans un objet (400) selon la revendication 1 ou 2, dans lequel le trépan à noyau (200) est relié de manière amovible à la foreuse à noyau (100).

4. Système de forage de trous dans un objet (400) selon la revendication 3, dans lequel le trépan à noyau (200) comporte un élément de raccord (201) reliant de manière amovible le trépan à noyau (200) à un élément de fixation (101) sur la foreuse à noyau (100).

5. Système de forage de trous dans un objet (400) selon la revendication 4, dans lequel l'élément de raccord (201) et l'élément de fixation (101) présentent des filets, des gorges ou des cannelures correspondants pour relier de manière libérable le trépan à noyau (200) à la foreuse à noyau (100).

6. Procédé de forage de trous dans un objet (400) comprenant une foreuse à noyau (100), un trépan à noyau (200) et une barre de réaction (300) conçue pour transmettre des forces de réaction en rotation de la foreuse à noyau (100) à l'objet (400), le trépan à noyau (200), lors du forage, tournant autour d'un axe (A) s'étendant dans une direction axiale, le trépan à noyau (200) étant relié à la foreuse à noyau (100), et la foreuse à noyau (100) étant équipée d'une source d'alimentation (108) afin d'appliquer une force de rotation au trépan à noyau (200), et le trépan à noyau (200) ayant un arbre tubulaire (202) s'étendant axialement avec une surface enveloppe intérieure (203) définissant une périphérie intérieure (204) du trépan à noyau (200) ; le procédé comprenant les étapes consistant à :
percer un trou pilote (401) dans l'objet (400) ;
relier de manière non rotative une partie arrière (302) de la barre de réaction à la foreuse à noyau (100), où la barre de réaction (300) est reliée de manière non rotative à la foreuse à noyau (100) à l'intérieur de la périphérie intérieure (204) de l'arbre tubulaire s'étendant axialement (202) du trépan à noyau (200),
relier de manière non rotative une partie avant (301) de la barre de réaction à l'objet (400) en alignant une ouverture de barre de réaction (501) d'un élément de couple (500) au trou pilote (401) et en attachant l'élément de couple (500) à l'objet (400) si bien que la barre de réaction (300) dans la direction axiale est reliée de manière coulissante à l'objet (400) par l'intermédiaire de l'élément de torsion (500), permettant à la barre de réaction de glisser à travers l'élément de couple (500) et le trou pilote (401) pendant l'opération de forage ;
réaliser l'opération de forage avec la barre de réaction reliée de manière non rotative à la foreuse à noyau (100) et l'objet (400).
